# EUROPÄISCHE PATENTSCHRIFT

(11) **EP 0 736 549 B1**
(45) Veröffentlichungstag und Bekanntmachung des Hinweises auf die Patenterteilung: **10.06.1998**
(21) Anmeldenummer: 96104586.1
(22) Anmeldetag: 22.03.1996
(51) Int. Cl.: C08F 36/04, C08F 2/34

(54) **Verfahren zur Herstellung von Dien-Kautschuken in der Gasphase**
Process for preparing diene rubbers in gasphase
Procédé de préparation de caoutchoucs de diènes en phase gazeuse

(30) Priorität: 04.04.1995 DE 19512120
(43) Veröffentlichungstag der Anmeldung: 09.10.1996
(73) Patentinhaber: BAYER AG, 51368 Leverkusen (DE)
(72) Erfinder: Sylvester, Gerd, Dr., 51375 Leverkusen (DE)

(56) Entgegenhaltungen:
- EP-A- 0 011 184
- EP-A- 0 647 657

## Beschreibung

Die Erfindung betrifft ein Verfahren zur Herstellung von Dien-Kautschuken in der Gasphase, das es ermöglicht, während der Herstellung die Klebrigkeit der Produkte so stark herabzusetzen, daß keine Störungen des Herstellprozesses durch verminderte Fließfähigkeit auftreten.

Dien-Kautschuke werden seit längerer Zeit in großtechnischem Maßstab produziert und für die Herstellung von Reifen und anderen Gummiwaren verwendet. Die Polymerisation wird dabei in flüssiger Phase unter Verwendung der verschiedensten Katalysatorsysteme durchgeführt.

Die Polymerisation in Lösung hat den Nachteil, daß während der Polymerisation hohe Viskositäten auftreten, die zu Schwierigkeiten bei der Förderung der Lösung und der Wärmeabführung führen. Die Abtrennung des gelösten Polymeren vom Lösungsmittel und die Entfernung von Lösungsmittel- und Monomerresten aus dem festen Polymeren erfordern einen relativ hohen apparativen Aufwand bei zugleich hohem Energieverbrauch. Außerdem können bei der Abtrennung des nicht umgesetzten Monomeren und des Lösungsmittels vom gebildeten Polymeren niedermolekulare Verbindungen über Abluft und Abwasser in die Umwelt gelangen und müssen deshalb entsprechend entsorgt werden.

Es ist auch bekannt, die Polymerisation ohne Zusatz von Lösungsmitteln in den flüssigen Monomeren durchzuführen. Ein solches Verfahren hat jedoch den Nachteil, daß bei der vollständigen Polymerisation eine große Wärmemenge frei wird, die schwer zu regulieren ist und deshalb ein beträchtliches Gefahrenpotential darstellt. Außerdem treten auch hier bei der Abtrennung der Polymeren von den Monomeren Belastungen für die Umwelt auf.

In den letzten Jahren haben sich zur Herstellung der Thermoplasten Polyethylen und Polypropylen Gasphasenverfahren als besonders vorteilhaft erwiesen und durchgesetzt. Die Vorteile des Gasphasenverfahrens beruhen insbesondere darauf, daß keine Lösungs- oder Dispergiermittel eingesetzt werden und deshalb eine erhebliche Kostenreduzierung erreicht wird. Außerdem treten keine hohen Viskositäten auf.

Die umweltrelevanten Vorteile des Gasphasenverfahrens beruhen insbesondere darauf, daß keine Lösungsmittel eingesetzt werden und Emissionen und Abwasserbelastungen verringert werden können. Zur Herstellung von Dien-Kautschuken sind Gasphasenverfahren bisher nicht beschrieben worden. Der Grund dafür, daß es bisher nicht möglich ist, Gasphasenverfahren zur Herstellung dieser Produkte anzuwenden, ist die besonders hohe Klebrigkeit der Dien-Kautschuke. Dadurch würden sich die einzelnen Teilchen nach kurzer Reaktionszeit zu größeren Aggregaten zusammenlagern. Das führt zu einem Verlust der Rieselfähigkeit, einer schlechteren Abführung der Polymerisationswärme und zu Störungen im Herstellprozeß.

Auch andere Kautschuke werden bisher nicht im technischen Maßstab durch Gasphasenverfahren produziert. Beschrieben wurde nur die Herstellung von Ethylen-Propylen-(Dien)-Kautschuken (EP(D)M) mittels Polymerisation aus der Gasphase. Auch hierbei treten, wenn auch in geringerem Maße, Probleme durch die Klebrigkeit des Produktes auf.

Für EP(D)M sind bisher zwei Ansätze zur Lösung dieses Problems bekannt: Man führt die Polymerisation entweder bei Temperaturen unterhalb der Erweichungstemperatur durch (EP 237 003) oder man verwendet Pudermittel.

Die Verwendung von Pudermitteln ist seit langem bekannt, um bei granulierten Kautschuken ein Zusammenbacken zu vermeiden. Der Einsatz dieses Verfahrens während der Polymerisation, wie er z.B. in EP 530 709 beschrieben wird, hat aber den Nachteil, daß die Dosierung des Pudermittels sehr genau erfolgen muß und daß trotzdem Verklebungen nicht in jedem Fall vermieden werden können. Außerdem können die Pudermittel Stoffe enthalten, die als Katalysatorgifte wirken und somit die Polymerisation stören. In der genannten EP-Anmeldung wird die Eignung des dort beschriebenen Verfahrens zwar auch für Polybutadien beschrieben, es werden aber weder geeignete Katalysatoren, noch entsprechende Reaktionsbedingungen dafür offenbart.

Die Polymerisation bei Temperaturen unterhalb der Erweichungstemperatur hat den Nachteil, daß die Reaktionsgeschwindigkeit bei tiefen Temperaturen gering ist und die Abführung der Polymerisationswärme Schwierigkeiten bereitet. Damit werden solche Verfahren teuer und technisch schwer zu beherrschen. Für Polybutadien liegt die Erweichungstemperatur so niedrig, daß das monomere Dien bei Normaldruck nicht mehr gasförmig vorliegt. So liegt z.B. die Glastemperatur von Polybutadien mit einem Gehalt von 98% cis-1.4-Doppelbindungen unter -100°C.

Aufgabe der vorliegenden Erfindung ist es daher, ein Verfahren zur Herstellung von Dien-Kautschuken durch Polymerisation in der Gasphase bereitzustellen, das auch bei Temperaturen, die eine hohe Polymerisationsgeschwindigkeit erlauben, eingesetzt werden kann, ohne Zusatz von Pudermitteln ein Verkleben vermeidet und zu Dien-Kautschuken mit ähnlichen Eigenschaften führt, wie sie bisher nur nach anderen Verfahren, z.B. durch Lösungspolymerisation, hergestellt werden können.

Die Aufgabe wird durch das erfindungsgemäße, zweistufige Verfahren gelöst. Die vorliegende Erfindung betrifft daher ein Verfahren zur Herstellung von Dien-Kautschuken in der Gasphase, das dadurch gekennzeichnet ist, daß man in der ersten Stufe die Diene oder Diengemische in Gegenwart eines Katalysators, bestehend aus:
A)
   einem Alkoholat der Seltenen Erden (I),
   einem Carboxylat der Seltenen Erden (II),
   einer Komplexverbindung der Seltenen Erden mit Diketonen (III) und/oder
   einer Additionsverbindung der Halogenide der Seltenen Erden mit einer Sauerstoff- oder Stickstoff-Donatorverbindung (IV) folgender Formeln:

      (RO)₃M (I),

      (R-CO₂)₃M (II),

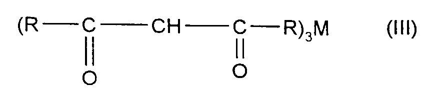

      und

      MX3 · y Donator (IV),
   B) einem Aluminiumtrialkyl, einem Dialkylaluminiumhydrid und/oder einem Alumoxan der Formeln (V) - (VIII):

      Al R₃ (V),

      HAl R₂ (VI),

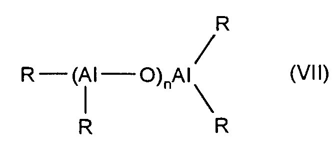

      und 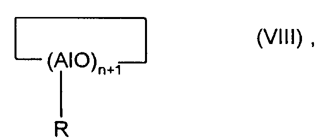 wobei in den Formeln
      - M: ein dreiwertiges Element der Seltenen Erden mit den Ordnungszahlen 57 bis 71 bedeutet,
      - R: gleich oder verschieden ist und Alkylreste mit 1 bis 10 Kohlenstoffatomen bedeutet,
      - X: für Chlor, Brom oder Iod steht
      - y: 1 bis 6 bedeutet und
      - n: 1 bis 50 bedeutet,
   C) einer weiteren Lewissäure und
   D) einem inerten, teilchenförmigen, anorganischen Feststoff mit einer spezifischen Oberfläche größer als 10 m²/g (BET) und einem Porenvolumen von 0,3 bis 15 ml/g,
      wobei das Molverhältnis der Komponente A zu Komponente B 1:1 bis 1:1000, bevorzugt 1:3 bis 1:2000, besonders bevorzugt 1:3 bis 1:10,0 beträgt, das Molverhältnis der Komponente A zu Komponente C 1:0,4 bis 1:15, bevorzugt 1:0,5 bis 1:8, beträgt und auf 100 g der Komponente D 0,1 mmol bis 1 Mol der Komponente A, bevorzugt 0,5 bis 50 mmol der Komponente A, eingesetzt werden,
bei Temperaturen von 0 bis 150°C, bevorzugt 0 bis 120°C, besonders bevorzugt bei 20 bis 100°C, und bei Drücken von 1 mbar bis 50 bar, bevorzugt 0,1 bis 20 bar, polymerisiert, wobei ein rieselfähiger Dien-Kautschuk mit einer Mooney-Viskosität ML (1+4', 100°C) von 70 bis 180 ME, bevorzugt 80 bis 150 ME, erhalten wird, und man in einer zweiten Stufe den erhaltenen rieselfähigen Dien-Kautschuk einer chemischen oder thermischen Abbaureaktion unterwirft bis eine Mooney-Viskosität ML (1+4', 100°C) von 10 bis 70 ME, bevorzugt 40 bis 60 ME, erreicht ist.

In der Komponente A bedeutet M ein dreiwertiges Element der Seltenen Erden mit den im Periodensystem gekennzeichneten Ordnungszahlen 57 bis 71. Bevorzugt werden solche Verbindungen, in denen M Lanthan, Praseodym oder Neodym oder ein Gemisch von Elementen der Seltenen Erden, welches mindestens eines der Elemente Lanthan, Praseodym oder Neodym zu wenigstens 10 Gew.-% enthält, bedeutet. Ganz besonders bevorzugt sind Verbindungen, in denen M Lanthan oder Neodym bzw. ein Gemisch von Seltenen Erden, welches Lanthan oder Neodym zu mindestens 30 Gew.-% enthält, bedeutet.

Als Reste R in den Formeln (I) - (IV) sind insbesondere geradkettige oder verzweigte Alkylreste mit 1 - 20 Kohlenstoffatomen, bevorzugt 1 - 15 Kohlenstoffatomen, zu nennen, wie Methyl, Ethyl, n-Propyl, n-Butyl, n-Pentyl, Isopropyl, Isobutyl, tert.-Butyl, 2 Ethylhexyl, neo-Pentyl, neo-Octyl, neo-Decyl, neo-Dodecyl.

Als Alkoholate der Komponente A werden z.B. genannt: Neodym(III)-n-propanolat, Neodym(III)-n-butanolat, Neodym(lll)-n-decanolat, Neodym(III)-isopropanolat, Neodym(III)-2-ethyl-hexanolat, Praseodym(III)-n-propanolat, Praseodym(III)-n-butanolat, Praseodym(III)-n-decanolat, Praseodym(III)-isopropanolat, Praseodym(III)-2-ethyl-hexanolat, Lanthan(III)-n-propanolat, Lanthan(III)-n-butanolat, Lanthan(III)-n-decanolat, Lanthan(III)-iso-propanolat, Lanthan(III)-2-ethyl-hexanolat, bevorzugt Neodym(III)-n-butanolat, Neodym(III)-n-decanolat, Neodym(III)-2-ethyl-hexanolat.

Als Carboxylate der Komponente A sind geeignet: Lanthan(lll)-propionat, Lanthan(III)-diethylacetat, Lanthan(III)-2-ethylhexanoat, Lanthan(III)-stearat, Lanthan(III)-benzoat, Lanthan(III)-cyclohexancarboxylat, Lanthan(III)-oleat, Lanthan(III)-versatat, Lanthan(III)-naphthenat, Praseodym(III)-propionat, Praseodym(III)-diethylacetat, Praseodym(III)-2-ethylhexanoat, Praseodym(III)-stearat, Praseodym(III)-benzoat, Praseodym(III)-cyclohexancarboxylat, Praseodym(lll)-oleat, Praseodym(lll)-versatat, Praseodym(III)-naphthenat, Neodym(III)-propionat, Neodym(III)-diethylacetat, Neodym(III)-2-ethylhexanoat, Neodym(III)-stearat, Neodym(III)-benzoat, Neodym(III)-cyclohexancarboxylat, Neodym(III)-oleat, Neodym(III)-versatat, Neodym(III)-naphthenat, bevorzugt Neodym(III)-2-ethylhexanoat, Neodym(III)-versatat, Neodym(III)-naphthenat. Besonders bevorzugt wird Neodymversatat.

Als Komplexverbindungen der Komponente A seien genannt: Lanthan(III)-acetylacetonat, Praseodym(III)-acetylacetonat, Neodym(III)-acetylacetonat, bevorzugt Neodym(III)-acetylacetonat.

Als Additionsverbindungen der Komponente A mit Donatoren werden beispielsweise genannt: Lanthan(III)-chlorid mit Tributylphosphat, Lanthan(III)-chlorid mit Tetrahydrofuran, Lanthan(III)-chlorid mit iso-Propanol, Lanthan(III)-chlorid mit Pyridin, Lanthan(III)-chlorid mit 2-Ethylhexanol, Lanthan(III)-chlorid mit Ethanol, Praseodym(III)-chlorid mit Tributylphosphat, Praseodym(III)-chlorid mit Tetrahydrofuran, Praseodym(III)-chlorid mit iso-Propanol, Praseodym(III)-chlorid mit Pyridin, Praseodym(III)-chlorid mit 2-Ethylhexanol, Praseodym(III)-chlorid mit Ethanol, Neodym(III)-chlorid mit Tributylphosphat, Neodym(III)-chlorid mit Tetrahydrofuran, Neodym(III)-chlorid mit iso-Propanol, Neodym(III)-chlorid mit Pyridin, Neodym(III)-chlorid mit 2-Ethylhexanol, Neodym(III)-chlorid mit Ethanol, Lanthan(III)-bromid mit Tributylphosphat, Lanthan(III)-bromid mit Tetrahydrofuran, Lanthan(III)-bromid mit iso-Propanol, Lanthan(III)-bromid mit Pyridin, Lanthan(III)-bromid mit 2-Ethylhexanol, Lanthan(III)-bromid mit Ethanol, Praseodym(III)-bromid mit Tributylphosphat, Praseodym(III)-bromid mit Tetrahydrofuran, Praseodym(III)-bromid mit iso-Propanol, Praseodym(III)-bromid mit Pyridin, Praseodym(III)-bromid mit 2-Ethylhexanol, Praseodym(III)-bromid mit Ethanol, Neodym(III)-bromid mit Tributylphosphat, Neodym(III)-bromid mit Tetrahydrofuran, Neodym(III)-bromid mit iso-Propanol, Neodym(III)-bromid mit Pyridin, Neodym(III)-bromid mit 2-Ethylhexanol, Neodym(III)-bromid mit Ethanol, bevorzugt Lanthan(III)-chlorid mit Tributylphosphat, Lanthan(III)-chlorid mit Pyridin, Lanthan(III)-chlorid mit 2-Ethylhexanol, Praseodym(III)-chlorid mit Tributylphosphat, Praseodym(III)-chlorid mit 2-Ethylhexanol, Neodym(III)-chlorid mit Tributylphosphat, Neodym(III)-chlorid mit Tetrahydrofuran, Neodym(III)-chlorid mit 2-Ethylhexanol, Neodym(III)-chlorid mit Pyridin, Neodym(III)-chlorid mit 2-Ethylhexanol, Neodym(III)-chlorid mit Ethanol.

Die Verbindungen der Seltenen Erden können einzeln oder im Gemisch untereinander eingesetzt werden.

Ganz besonders bevorzugt werden Neodymversatat, Neodymoctanoat und/oder Neodymnaphthenat als Komponente A eingesetzt.

In den Formeln (V) bis (VIII) der Komponente B bedeutet R einen geradkettigen oder verzweigten Alkylrest mit 1 bis 10 C-Atomen, bevorzugt 1 bis 4 C-Atomen. Beispiele für geeignete Aluminiumalkyle der Formeln (V) und (VI) sind:

Trimethylaluminium, Triethylaluminium, Tri-n-propylaluminium, Triisopropylaluminium, Tri-n-butylaluminium, Triisobutylaluminium, Tripentylaluminium, Trihexylaluminium, Tricyclohexylaluminium, Trioctylaluminium, Diethylaluminiumhydrid, Di-n-butylaluminiumhydrid und Di-iso-butylaluminiumhydrid. Bevorzugt werden Triethylaluminium, Triisobutylaluminium und Di-isobutylaluminiumhydrid.

Als Beispiele für Alumoxane (VII) und (VIII) werden genannt: Methylalumoxan, Ethylalumoxan und iso-Butylalumoxan, bevorzugt Methylalumoxan und iso-Butylalumoxan.

Die Aluminiumalkyle können einzeln oder im Gemisch untereinander eingesetzt werden.

Als Komponente C werden sogenannte Lewis-Säuren eingesetzt. Beispielhaft seien die Organometallhalogenide erwähnt, in denen das Metallatom der Gruppe 3a) oder 4a) angehört, sowie Halogenide der Elemente der Gruppe 3a), 4a) und 5a) des Periodensystems, wie es im "Handbook of Chemistry and Physics", 45th Edition 1964-65 dargestellt ist. Genannt werden insbesondere:
Methylaluminiumdibromid, Methylaluminiumdichlorid, Ethylaluminiumdibromid, Ethylaluminiumdichlorid, Butylaluminiumdibromid, Butylaluminiumdichlorid, Dimethylaluminiumbromid, Dimethylaluminiumchlorid, Diethylaluminiumbromid, Diethylaluminiumchlorid, Dibutylaluminiumbromid, Dibutylaluminiumchlorid, Methylaluminiumsesquibromid, Methylaluminiumsesquichlorid, Ethylaluminiumsesquibromid, Ethylaluminiumsesquichlorid, Aluminiumtribromid, Antimontrichlorid, Antimonpentachlorid, Phoxphortrichlorid, Phosphorpentachlorid, Zinntetrachlorid.

Bevorzugt werden D iethylaluminiumchlorid, Ethylalum iniu msesquichlor id, Ethylaluminiumdichlorid, Diethylaluminiumbromid, Ethylaluminiumsesquibromid und/oder Ethylaluminiumdibromid eingesetzt.

Als Komponente C können auch die Reaktionsprodukte aus Aluminiumverbindungen, wie sie als Komponente B beschrieben werden, mit Halogenen oder Halogenverbindungen, z.B. Triethylaluminium mit Brom oder Triethylaluminium mit Butylchlorid, eingesetzt werden. In diesem Fall kann die Umsetzung getrennt durchgeführt werden, oder die für die Umsetzung benötigte Menge der Alkylaluminiumverbindung wird zu der als Komponente B benötigten Menge addiert.
Bevorzugt werden Ethylaluminiumsesquichlorid, Butylchlorid und Butylbromid.

Bei Verwendung der Alumoxane (VII) und (VIII) als Komponente B kann auf die Komponente C ganz oder teilweise verzichtet werden.

Als Komponente D werden inerte, teilchenförmige, anorganische Feststoffe mit einer spezifischen Oberfläche größer als 10, bevorzugt 10 bis 1 000 m²/g (BET) und einem Porenvolumen von 0,3 bis 15, bevorzugt von 0,5 bis 12 ml/g eingesetzt. Die spezifische Oberfläche (BET) wird in üblicher Weise bestimmt nach S. Brunauer, P.H. Emmet und Teller, J. Amer. Chem. Soc. 60 (2), 309 (1938), das Porenvolumen wird bestimmt durch die Zentrifugationsmethode nach M. McDaniel, J. Colloid Interface Sci. 78, 31 (1980).

Als inerte, anorganische Feststoffe eignen sich insbesondere Silicagele, Tone, Alumosilikate, Talkum, Zeolithe, Ruß, anorganische Oxyde, wie Siliciumdioxyd, Aluminiumoxyd, Magnesiumoxyd, Titandioxyd, Siliciumcarbid, bevorzugt Silicagele, Aluminiumoxid, Zeolithe und Ruß, besonders bevorzugt Silicagel. Unter inert wird in diesem Fall verstanden, daß die Feststoffe weder eine reaktive Oberfläche aufweisen noch adsorbiertes Material enthalten, die die Bildung eines aktiven Katalysators hindern bzw. mit den Monomeren reagieren.

Die genannten inerten, anorganischen Feststoffe, die der obengenannten Spezifikation genügen und deshalb für den Einsatz geeignet sind, werden beispielsweise näher beschrieben in Ullmanns, Enzyclopädie der technischen Chemie, Band 21, S. 439 ff. (Silicagele), Band 23, S. 311 ff. (Tone), Band 14, S. 633 ff. (Ruße), Band 24, S. 575 ff. und Band 17, S. 9 ff. (Zeolithe).

Die anorganischen Feststoffe können einzeln oder im Gemisch untereinander eingesetzt werden.

Es ist auch möglich, den Katalysatorkomponenten A bis D noch eine weitere Komponente E zuzusetzen. Diese Komponente E ist ein konjugiertes Dien, das das gleiche Dien sein kann, das später mit dem Katalysator polymerisiert werden soll. Bevorzugt werden verwendet Butadien und Isopren.

Wird die Komponente E dem Katalysator zugesetzt, so beträgt die Menge an E bevorzugt 0,1-1000 mol, bezogen auf 1 mol der Komponente A, besonders bevorzugt 0,1-100 mol, bezogen auf 1 mol der Komponente A. Ganz besonders bevorzugt werden 0,5-50 mol, bezogen auf 1 mol der Komponente A, an E eingesetzt.

Als Diene können in das erfindungsgemäße Verfahren insbesondere eingesetzt werden Butadien-1.3, Isopren, Pentadien-1.3, Hexadien-1.3, 2.3-Dimethylbutadien-1.3 und Octadien-1.3, bevorzugt Butadien-1.3, Isopren und Pentadien-1.3, besonders bevorzugt Butadien-1.3.

Die Polymerisation der Diene oder Diengemische erfolgt erfindungsgemäß, indem man das gasförmige Dien mit dem Katalysator in Berührung bringt. Dem gasförmigen Dien können weitere inerte Gase zugemischt werden, wie Stickstoff oder Butan, die entweder der Verdünnung oder der Wärmeabführung dienen.

Für die Erzielung der genannten hohen Mooney-Viskositäten der Dien-Kautschuke ist eine gute Kontrolle der Polymerisationstemperatur erforderlich. Die gemessene Temperatur ist in vielen Fällen nicht identisch mit der maximalen Temperatur, die in den verschiedenen Teilchen auftritt. Die maximale Temperatur sollte 150°C nicht überschreiten. Deshalb wird die Polymerisation bei Temperaturen von 0 bis 150°C, bevorzugt 0 bis 120°C, besonders bevorzugt 20 bis 100°C, durchgeführt.

Um eine gute Temperaturkontrolle bei der Dien-Polymerisation zu gewährleisten, ist es häufig sinnvoll, die Geschwindigkeit der Dienzugabe so einzustellen, daß eine zu hohe Temperatur im Reaktionsgemisch vermieden wird. Beispielsweise wird die Dienzugabe so dosiert, daß auch bei einer Erhöhung des Umsatzes pro Zeiteinheit um 20 % gegenüber dem ursprünglichen Wert die Kühlkapazität ausreicht, um eine Temperaturerhöhung, bezogen auf die ursprünglich eingestellte Temperatur, zu verhindern.

Das erfindungsgemäße Verfahren kann in jeder für eine Gasphasenpolymerisation geeigneten Apparatur bewerkstelligt werden. So kann z.B. ein Rührreaktor, ein Drehreaktor oder ein Fließbettreaktor oder eine Kombination dieser Reaktortypen eingesetzt werden. Das erfindungsgemäße Verfahren wird so gestaltet, daß die Polymerisation der eingesetzten Diene zu einem rieselfähigen Polydienkautschuk führt mit einer Mooney-Viskosität (ML (1+4', 100°C)) von 70 bis 180 ME, bevorzugt 80 bis 150 ME.

In einer gängigen Ausführungsform wird bei der Polymerisation in der ersten Stufe des Verfahrens wie folgt verfahren:

Der Katalysator wird in eine Apparatur überführt, die geeignet ist, den pulverförmigen Katalysator in Bewegung zu halten. Das kann z.B. durch Rühren, Drehen und/oder einen Gasstrom erfolgen. Das zunächst im Gasraum befindliche inerte Gas, z.B. Stickstoff, wird durch das gasförmige Monomere (Dien) ersetzt. Dabei setzt eine sofortige Polymerisation ein und die Temperatur steigt an. Das Monomere wird, gegebenenfalls mit einem Inertgas verdünnt, dem Reaktor nur so schnell zugeführt, daß die gewünschte maximale Reaktionstemperatur nicht überschritten wird. Die Reaktionstemperatur kann auch auf übliche Weise durch Heizen bzw. Kühlen eingestellt werden. Die Polymerisation wird durch Abstellen der Monomerzufuhr beendet. Der Katalysator kann nach der ersten Stufe des Verfahren desaktiviert werden oder in seiner aktiven Form erhalten bleiben.

Der bei der ersten Stufe anfallende rieselfähige Dienkautschuk wird erfindungsgemäß in einer zweiten Stufe einer chemischen oder thermischen Abbaureaktion unterworfen, wobei ein Polydien erhalten wird mit einer Mooney-Viskosität im Bereich von 10 bis 70 ME, bevorzugt 40 bis 60 ME.

Die Verringerung der Mooney-Viskosität in der zweiten Reaktionsstufe des erfindungsgemäßen Verfahrens kann erreicht werden, indem man die in der ersten Stufe erhaltenen Dien-Kautschuke unter Zusatz von sogenannten Mastiziermitteln, z.B. Pentachlorthiophenol oder Dibenzoaminodiphenyldisulfid, gegebenenfalls in Kombination mit einem Booster, in einem geeigneten Hochviskoseaggregat, z.B. einem Kneter, einem Walzwerk oder einer Schneckenmaschine, einer entsprechenden Scherung unterwirft. Mastiziermittel und ihr Einsatz zur Verminderung des Molekulargewichts von Kautschuken sind bekannt und werden z.B in Kirk-Othmer, Encyclopedia of Chemical Technology, Third Edition 1982, Band 20, Seite 436 bis 437 oder in Ullmanns Encyclopedia of Industrial Chemistry, Fifth Edition 1993, Seite 404 bis 405 beschrieben.

Die Bedingungen, unter denen die zweite Stufe des erfindungsgemäßen Verfahrens durchgeführt wird, hängen von der Art des verwendeten Hochviskos-Aggregates, von der Mooneyviskosität des Dien-Kautschuks nach der ersten Stufe des Verfahrens und von der angestrebten Mooneyviskosität des Endproduktes ab.

Die Temperatur kann dabei in einem weiten Bereich variiert werden. Üblicherweise liegt die Temperatur bei 25 bis 190°C, bevorzugt zwischen 80 bis 180°C.

Das Mastiziermittel wird in einer Menge von 0,01 bis 10, bevorzugt 0,05 bis 5 und besonders bevorzugt 0,1 bis 3 phr, eingesetzt.

Das nachfolgende Beispiel soll die Erfindung verdeutlichen.

### Beispiele

### Beispiel 1

### a) Vorbehandlung des Trägers:

Als Träger wurde Vulkasil S verwendet. Vulkasil ist ein Silicagel der Bayer AG mit einer Oberfläche nach BET von 230 m²/g. Das Porenvolumen beträgt 2,95 ml/g. Vor dem Einsatz war das Vulkasil S 24 Stunden bei 250°C getrocknet und anschließend 100 g Vulkasil S mit einer Lösung von 50 mMol Diisobutylaluminiumhydrid (DIBAH) in 500 ml Hexan 20 Minuten gerührt worden. Danach wurde das Hexan im Vakuum abgezogen und der Rückstand im Vakuum bei 25°C getrocknet.

### b) Herstellung des Katalysators:

Ein Katalysator wurde hergestellt, indem in einem 1 l-Kolben, ausgerüstet mit einer N₂-Zuführung und einem Magnetrührer, 120 ml trockenes n-Hexan, 150 mMol DIBAH und 3,0 mMol Ethylaluminiumsesquichlorid (EASC) vermischt wurden. Nachdem 0,15 g Butadien in die Lösung eingeleitet worden waren, wurden 3,0 mMol Neodymversatat (NDV) zugegeben. Das resultierende Gemisch wurde zu einer Aufschlämmung von 100 g des unter a) beschriebenen Trägers in 200 ml n-Hexan gegeben. Nach 5 Minuten wurde der Ansatz im Vakuum zur Trockne eingedampft. Es wurden 106 g eines frei fließenden Pulvers isoliert.

### c) Polymerisation:

Die Polymerisation wurde in einem Rotationsverdampfer, der mit einem Magnetrührstab, einem Quecksilber-Überdruckventil und Anschlüssen zu einer Vakuumpumpe und zur Versorgung mit gasförmigem Stickstoff und Butadien sowie einem bis fast auf den Boden des 1 l-Kolbens reichenden Thermofühler ausgerüstet war, durchgeführt. Die Neigung des Rotationsverdampfers wurde so eingestellt, daß die Drehachse mit der des Stabmagneten einen Winkel von 45° bildete. Das gesamte Volumen der Apparatur betrug 1,5 Liter. In den Kolben wurden 21,2g des Katalysators unter Stickstoff eingefüllt. Die Apparatur wurde auf 1 mbar evakuiert und unter Rühren und Drehen mit gasförmigem, trockenen Butadien gefüllt und bei einem Druck zwischen 950 und 1000 mbar gehalten. Die Apparatur wurde mittels eines Gebläses gekühlt. Die Temperatur stieg innerhalb von 50 Minuten auf 96°C. Nach 50 Minuten waren 97 g Butadien verbraucht worden, die Temperatur betrug 80°C. Das Kühlgebläse wurde ausgeschaltet.

Während der gesamten Reaktionszeit lag das entstandene Polybutadien in einer rieselfähigen, körnigen Form vor. Es traten keine Anbackungen an der Reaktorwand auf.

Nach 16,5 Stunden wurde die Butadienzufuhr abgestellt, die Apparatur evakuiert, mit N₂ aufgefüllt und das entstandene grobkörnige Produkt aus dem Kolben genommen. Das Gewicht betrug 374 g. Das Produkt wurde auf der Walze mit 4 g Stearinsäure und 2 g Vulkanox BKF der Bayer AG abgestoppt und stabilisiert.

Die Mooneyviskosität des Polymeren ML (1 + 4'; 100°C), betrug 154 ME.

### d) Abbau

55 g des so hergestellten Polymeren wurden in einen auf 120°C vorgeheizten Kneter (Haake "Rheocord System 90") gefüllt und nach dem Kompaktieren mit 1,5 g Renacit 11, einem Mastiziermittel, das als wirksame Substanz 40 Gew.% 2,2-Dibenzamido-diphenyldisulfid enthält, bei 50 Upm geknetet. Nach Erreichen des maximalen Drehmomentes von 28 Nm bei 133°C nahm das Drehmoment innerhalb von 20 Minuten auf 11 Nm bei 121°C ab. Nach einer Lagerung von 24 Stunden wurde die Mooneyviskosität des Polymeren ML(1 + 4'; 100°C) zu 17 ME bestimmt.

## Patentansprüche

1. Verfahren zur Herstellung von Dien-Kautschuken in der Gasphase, dadurch gekennzeichnet, daß man in der 1.Stufe die Diene oder Diengemische in Gegenwart eines Katalysators, bestehend aus:
A)
einem Alkoholat der Seltenen Erden (I),
einem Carboxylat der Seltenen Erden (II),
einer Komplexverbindung der Seltenen Erden mit Diketonen (III) und/oder
einer Additionsverbindung der Halogenide der Seltenen Erden mit einer Sauerstoff- oder Stickstoff-Donatorverbindung (IV) folgender Formeln:
(RO)₃M (I),
(R-CO₂)₃M (II), 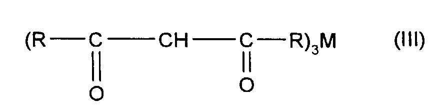
und
MX3 · y Donator (IV),
B) einem Aluminiumtrialkyl, einem Dialkylaluminiumhydrid und/oder einem Alumoxan der Formeln (V) - (VIII):
Al R₃ (V),
HAl R₂ (VI), 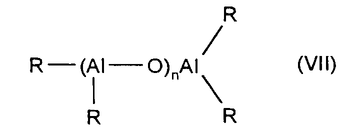
und 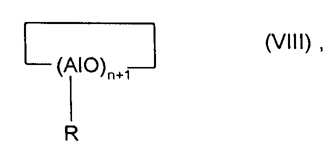 wobei in den Formeln
M ein dreiwertiges Element der Seltenen Erden mit den Ordnungszahlen 57 bis 71 bedeutet,
R gleich oder verschieden ist und Alkylreste mit 1 bis 10 Kohlenstoffatomen bedeutet,
X für Chlor, Brom oder Iod steht
y 1 bis 6 bedeutet und
n 1 bis 50 bedeutet,
C) einer weiteren Lewissäure und
D) einem inerten, teilchenförmigen, anorganischen Feststoff mit einer spezifischen Oberfläche größer als 10 m²/g (BET) und einem Porenvolumen von 0,3 bis 15 ml/g,
wobei das Molverhältnis der Komponente A zu Komponente B 1:1 bis 1:1000 beträgt, das Molverhältnis der Komponente A zu Komponente C 1:0,4 bis 1:15 beträgt und auf 100 g der Komponente D 0,1 mMol bis 1 Mol der Komponente A eingesetzt werden,
bei Temperaturen von 0 bis 150°C und bei Drücken von 1 mbar bis 50 bar polymerisiert, wobei ein rieselfähiger Dien-Kautschuk mit einer Mooney-Viskosität ML (1+4', 100°C) von 70 bis 180 ME erhalten wird, und man in einer zweiten Stufe den erhaltenen rieselfähigen Dien-Kautschuk einer chemischen oder thermischen Abbaureaktion unterwirft bis eine Mooney-Viskosität ML (1+4', 100°C) von 10 bis 70 ME erreicht ist.

## Claims

1. Method for the production of diene rubbers in the gas phase, characterised in that in the first stage the dienes or diene mixtures, in the presence of a catalyst consisting of:
A)
an alcoholate of the rare earths (I),
a carboxylate of the rare earths (II),
a complex compound of the rare earths with diketones (III) and/or
an addition compound of the halides of the rare earths with an oxygen donor compound or nitrogen donor compound (IV) corresponding to the following formulae:
(RO)₃M (I),
(R-CO₂)₃M (II), 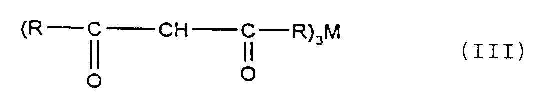
and
MX₃ · y donor (IV),
B) an aluminium trialkyl, a dialkylaluminium hydride and/or an alumoxan corresponding to the formulae (V) - (VIII):
Al R₃ (V),
HAl R₂ (VI), 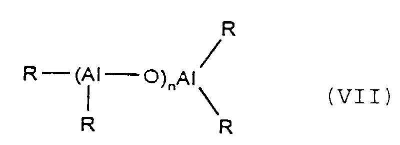
and 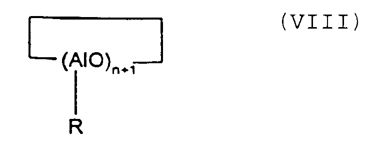 wherein in the formulae
M signifies a trivalent element from the rare earths having the atomic numbers 57 to 71,
R is identical or different and signifies alkyl radicals having 1 to 10 carbon atoms,
X represents chlorine, bromine or iodine
y signifies 1 to 6
n signifies 1 to 50,
C) a further Lewis acid and
D) an inert, particulate, inorganic solid substance having a specific surface of greater than 10 m²/g (BET) and a pore volume of from 0.3 to 15 ml/g,
with the molar ratio of component A to component B amounting to 1:1 to 1:1000, the molar ratio of component A to component C amounting to 1:0.4 to 1:15 and with from 0.1 mmol to 1 mol of component A being used per 100 g of component D,
are polymerised at temperatures of from 0 to 150°C and at pressures of from 1 mbar to 50 bar, with a pourable diene rubber having a Mooney viscosity ML (1 + 4', 100°C) of 70 to 180 Mooney units being obtained, and in a second stage the pourable diene rubber obtained is subjected to a chemical or thermal decomposition reaction until a Mooney viscosity ML (1 + 4', 100°C) of 10 to 70 Mooney units is obtained.

## Revendications

1. Procédé de préparation de caoutchoucs diéniques en phase gazeuse, caractérisé en ce que, au premier stade opératoire, on polymérise le diène ou mélange de diènes en présence d'un catalyseur consistant en :
A)
un alcoolate des terres rares (I),
un carboxylate des terres rares (II),
un complexe de terres rares et de dicétones (III) et/ou
un composé d'addition des halogénures des terres rares et d'un composé donateur d'oxygène ou d'azote (IV), aux formules suivantes :
(RO)₃M (I),
(R-CO₂)₃M (II), 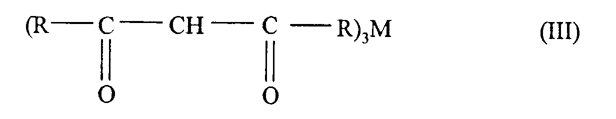
et
MX3·y donateur (IV),
B) un trialkylaluminium, un hydrure de dialkylaluminium et/ou un alumoxane de formules respectives (V) à (VIII) :
Al R₃ (V),
HAl R₂ (VI), 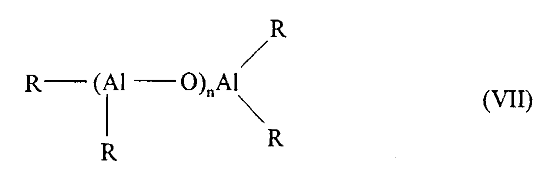
et 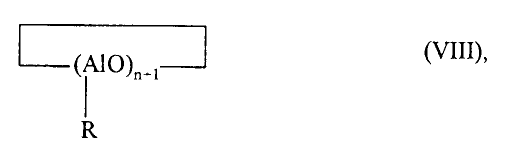 les symboles de ces formules ayant les significations suivantes :
M représente un élément trivalent des terres rares, de numéro atomique 57 à 71,
les symboles R, ayant des significations identiques ou différentes, représentent chacun un groupe alkyle en C₁-C₁₀,
X représente le chlore, le brome ou l'iode,
y est un nombre allant de 1 à 6 et
n un nombre allant de 1 à 50,
C) un autre acide de Lewis et
D) une substance solide minérale inerte à l'état de particules, dont la surface spécifique (BET) est supérieure à 10 m²/g et dont le volume de pores va de 0,3 à 15 ml/g,
avec un rapport molaire du composant A au composant B qui va de 1:1 à 1:1 000, un rapport molaire du composant A au composant C qui va de 1:0,4 à 1:15, et 0,1 mmol à 1 mol du composant A pour 100 g du composant D,
à des températures de 0 à 150°C et des pressions de 1 mbar à 50 bar, ce qui donne un caoutchouc diénique qui s'écoule bien, et à une viscosité Mooney ML (1 + 4', 100°C) de 70 à 180 UM, qu'on soumet dans un deuxième stade opératoire à une réaction de dégradation chimique ou thermique jusqu'à une viscosité Mooney ML (1 + 4', 100°C) de 10 à 70 UM.
